# FASCICULE DE BREVET EUROPEEN

(11) **EP 1 299 665 B1**
(45) Date de publication et mention de la délivrance du brevet: **13.04.2005**
(21) Numéro de dépôt: 01949548.0
(22) Date de dépôt: 27.06.2001
(51) Int. Cl.: F16K 31/126

(54) **VANNE A COMMANDE PNEUMATIQUE**
PNEUMATISCH ANGESTEUERTES VENTIL
PNEUMATIC CONTROL VALVE

(30) Priorité: 11.07.2000 FR 0009065
(43) Date de publication de la demande: 09.04.2003
(73) Titulaire: Asco Joucomatic, 92506 Rueil Malmaison Cédex (FR)
(72) Inventeur: DOLEANS, Michael, 28630 SOURS (FR); BAZIN, Vincent, 28360 DAMMARIE (FR); GOUSSEAU, Bernard, 28630 THIVARS (FR)
(74) Mandataire: Peaucelle, Chantal
(86) Numéro de dépôt international: PCT/FR2001/002043
(87) Numéro de publication internationale: WO 2002/004852

(56) Documents cités:
- US-A- 3 785 612
- US-A- 3 874 629
- US-A- 5 746 198
- US-A- 5 863 023

## Description

La présente invention concerne une vanne à commande pneumatique destinée à assurer la distribution de fluides de toute nature, compressibles ou non, pouvant atteindre des températures élevées, notamment en vue d'applications dans l'industrie agro-alimentaire (stérilisation par exemple) et dans les processus industriels.

Le problème technique résolu par la présente invention est celui de la conception d'une vanne compacte, de faible encombrement, permettant de réaliser des assemblages de vannes identiques, positionnées les unes à côté des autres par juxtaposition, de manière que l'encombrement en largeur de ces assemblages ne dépasse pas l'encombrement en largeur des conduites respectives d'alimentation et d'évacuation des vannes qui les constituent.

En conséquence, la présente invention concerne une vanne à commande pneumatique comportant un piston de commande à rappel par ressort auquel est attelé un organe d'obturation des voies d'admission et d'échappement prévues dans le corps d'actionneur, caractérisée en ce que ledit piston de commande présente une section droite elliptique, son grand axe étant situé dans le même plan que l'axe des conduites d'admission et d'évacuation du fluide véhiculé par la vanne et la longueur de son petit axe étant choisi de façon que la largeur dudit corps d'actionneur ne dépasse pas la valeur d'encombrement des éléments de. raccordement des conduites auxquelles ladite vanne est raccordée.

Selon une autre caractéristique de la présente invention, le joint qui assure l'étanchéité entre le piston de commande et le corps d'actionneur est monté statique dans un logement ménagé dans ledit corps d'actionneur.

D'autres caractéristiques et avantages de la présente invention ressortiront de la description faite ci-après en référence aux dessins annexés qui en illustrent divers exemples de réalisation dépourvus de tout caractère limitatif. Sur les dessins :
- les figures 1 et 2 sont des vues en coupe axiale verticale de deux exemples de réalisation d'une vanne selon l'invention ;
- la figure 3 est une vue éclatée représentant les différents composants d'une vanne selon l'invention conforme au mode de réalisation de la figure 1 ;
- les figures 4 et 5 sont des vues en coupe axiale d'une vanne conforme au mode de réalisation de la figure 2, respectivement en version « normalement fermée » et en version « normalement ouverte » ;
- la figure 6 est une vue en perspective d'un exemple de réalisation de la vanne selon l'invention ;
- la figure 7 est une vue en perspective d'un assemblage réalisé par juxtaposition côte à côte d'une pluralité de vannes selon un autre exemple de réalisation de l'invention.
- les figures 8 et 9 sont respectivement des vues en plan et en bout de l'assemblage illustré par la figure 7, ces figures 8 et 9 n'étant pas à la même échelle.
- les figures 10a à 10c sont respectivement des vues en perspective, en élévation latérale et en plan d'un assemblage de vannes selon l'invention, en configuration « îlot de distribution « et
- les figures 11 a à 11 c sont respectivement des vues en perspective, en élévation latérale et en plan d'un autre assemblage de vannes selon l'invention, également en configuration « îlot de distribution « .

En se référant aux dessins, on voit que la vanne à commande pneumatique selon l'invention comporte comme connu un corps d'actionneur 10 dans lequel est monté un piston de commande 1 sur lequel agit la pression de commande et qui est rappelé par un ressort, ce piston étant prolongé par une tige de commande 2 portant à son extrémité l'organe d'obturation 3 des voies d'admission et d'échappement de la vanne, respectivement 4 et 5.

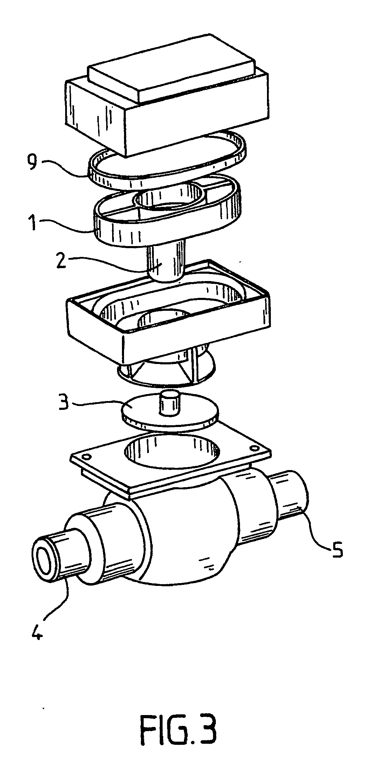

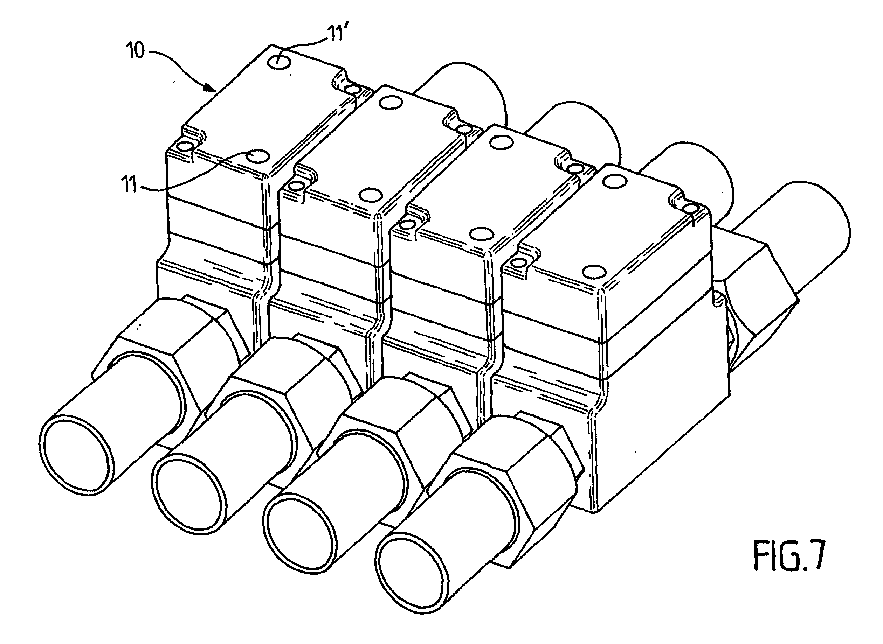

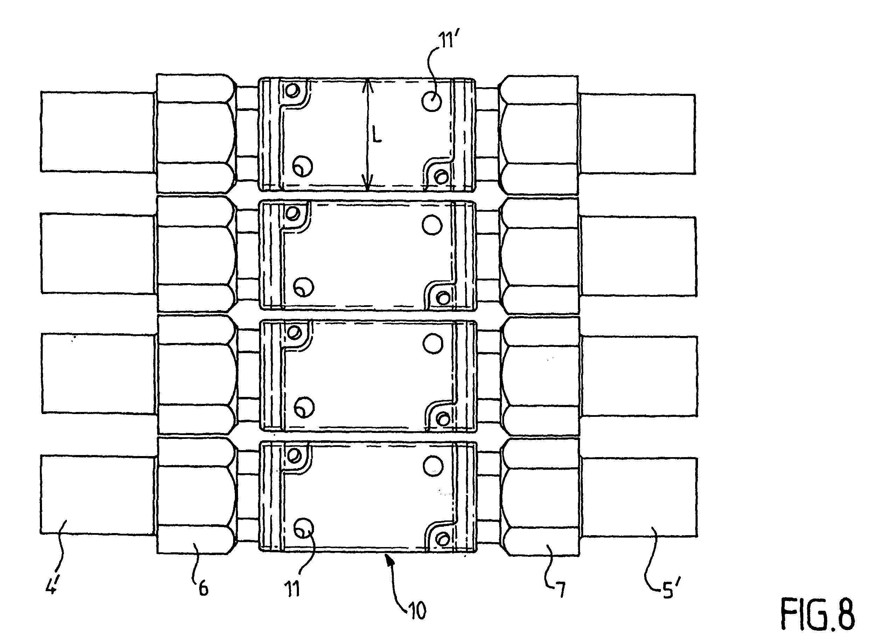

Selon la présente invention, le piston de commande 1 présente une section elliptique ainsi qu'on le voit clairement sur la figure 3. Le grand axe de cette ellipse est situé dans le même plan que l'axe des conduites 4' et 5' sur lesquelles sont raccordées respectivement les voies 4 et 5 de la vanne et la longueur du petit axe de l'ellipse est choisie de manière que la largeur L du corps d'actionneur 10 ne dépasse pas la valeur du diamètre desdites conduites 4' et 5' et de leurs éléments de raccordement 6 et 7 audit corps (voir les figures 7 et 8 sur lesquelles on reviendra ci-après). Grâce à cette caractéristique, on diminue dans des proportions importantes l'encombrement en largeur de la vanne par rapport aux vannes selon l'état antérieur de la technique qui possèdent un piston de commande à section circulaire.

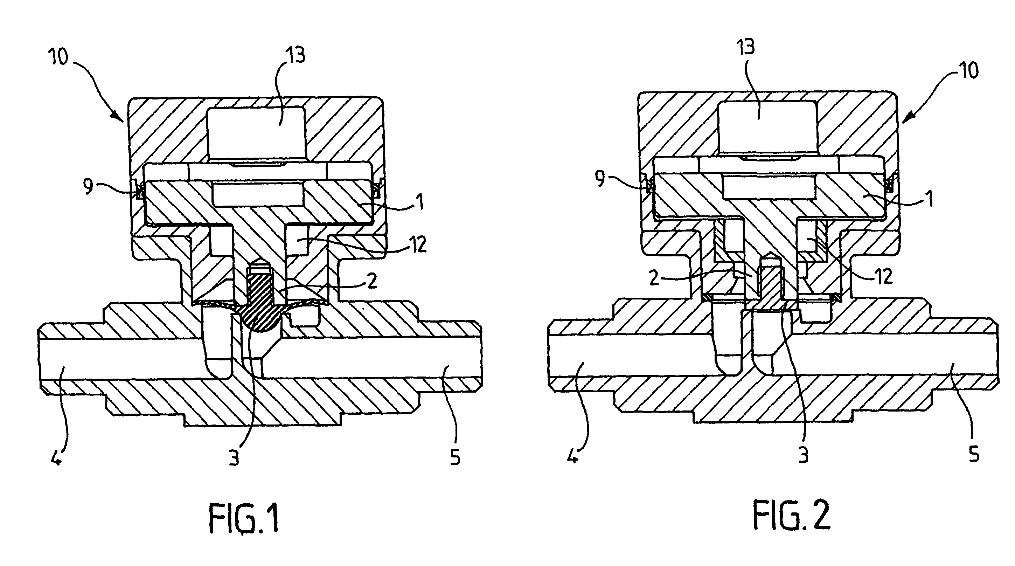

L'organe d'obturation 3 peut être du type à membrane comme illustré par les figures 1 et 3. Dans cet exemple de réalisation non limitatif, la membrane de l'organe d'obturation contribue en outre à assurer l'étanchéité entre le corps d'actionneur 10 et la tige de commande 2, comme on le voit clairement sur la figure 1 où la vanne a été représentée en position fermée.

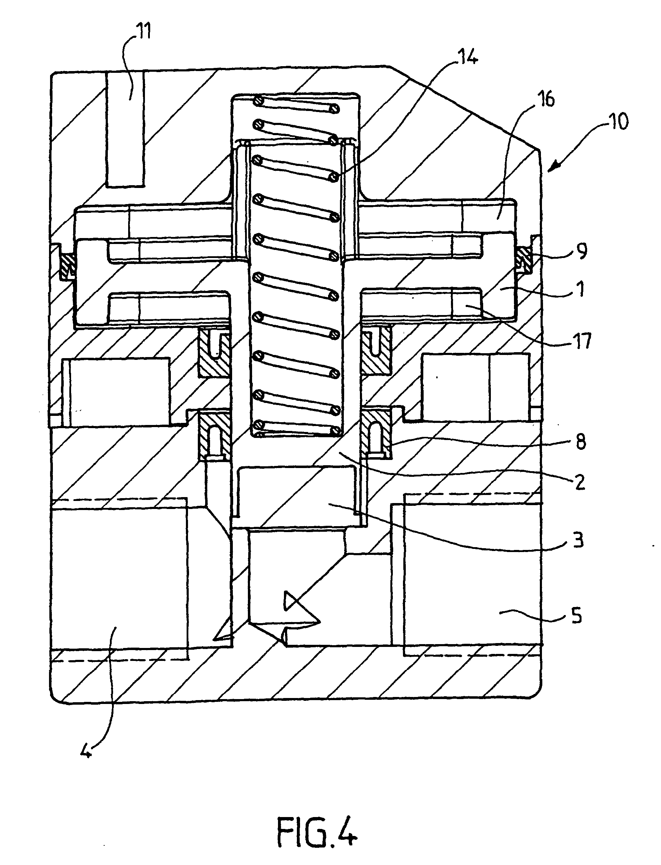

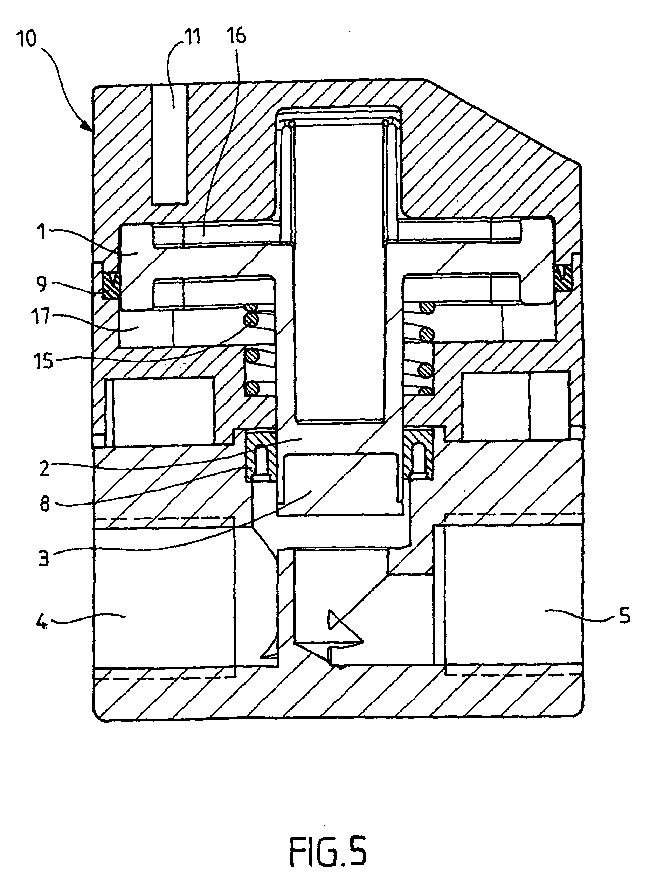

Dans l'exemple de réalisation représenté sur les figures 2, 4 et 5, l'organe d'obturation 3 est réalisé sous la forme d'un clapet en forme de piston qui est encastré dans un logement prévu à l'extrémité de la tige de commande 2. Dans cette variante, l'étanchéité entre la tige de commande 2 et le corps d'actionneur 10 est assurée par un système de joint 8 (figures 4 et 5).

Le pilotage du piston de commande 1 s'effectue depuis la partie supérieure du corps d'actionneur, les circuits de pilotage étant prévus dans le corps 10. Sur les figures 4-8, on a désigné par les références 11 et 11' les orifices de pilotage débouchant sur la surface supérieure du corps 10, les circuits de pilotage internes n'étant pas visibles sur les dessins. Selon l'invention, la face supérieure du corps 10 peut être aménagée en plan de pose pour une électrovanne de pilotage, ce plan de pose pouvant être bien entendu normalisé.

Selon une autre caractéristique de cette invention, le joint 9 assurant l'étanchéité entre le corps d'actionneur 10 et le piston de commande 1 est monté dans un logement prévu dans ledit corps 10 ainsi qu'on peut le voir, notamment sur les figures 1 et 2. Grâce à cette caractéristique, le joint 9 qui est statique dans son logement assure une double fonction d'étanchéité, d'une part sur le corps 10, et d'autre part sur le piston 1.

La vanne selon l'invention peut être du type « normalement ouverte » ou du type « normalement fermée ».

Dans l'exemple de réalisation illustré par la figure 1, lorsque la vanne doit être du type normalement ouverte, le ressort de rappel est disposé dans l'alésage 12 et il exerce son effort de rappel sur la face inférieure du piston 1 (ce ressort n'a pas été représenté) et la pression de commande s'exerce sur la face supérieure du piston 1 à partir de la chambre 13 alors que, lorsque la vanne est du type normalement fermée, le ressort de rappel est disposé dans la chambre 13 et exerce son action sur la face supérieure du piston, et la pression de commande qui s'exerce sur la face inférieure du piston 1 est admise dans l'alésage 12.

Les mêmes configurations et fonctions peuvent être obtenues avec l'exemple de réalisation illustré par la figure 2. En version normalement ouverte, le ressort de rappel est disposé dans l'alésage 12 et la pression de commande s'exerce sur la face supérieure du piston 1 à partir de la chambre 13, alors qu'en version normalement fermée, le ressort de rappel est logé dans la chambre 13 et la pression de commande s'exerce sur la face inférieure du piston à partir de l'alésage 12.

Sur les variantes illustrées aux figures 4 et 5, on retrouve les caractéristiques de la vanne représentée sur la figure 2. On y voit les ressorts de rappel 14 et 15 correspondant respectivement aux versions « vanne normalement fermée » (figure 4) et « vanne normalement ouverte » (figure 5). Cependant dans cette variante, la pression de commande s'exerce toujours dans la chambre recevant le piston de commande 1, celle-ci étant séparée en deux enceintes distinctes et indépendantes 16 et 17, par le piston 1.

En version normalement fermée (figure 4), la pression de commande est admise dans la chambre inférieure 17 et elle s'exerce sur la face inférieure du piston 1 à l'encontre de l'action du ressort 14 alors que, dans la version normalement ouverte (figure 5), la pression de commande est admise dans la chambre supérieure 16 de façon qu'elle s'exerce sur la face supérieure du piston à l'encontre de l'action du ressort 15.

Parmi les avantages apportés par l'invention, le plus important est celui d'un encombrement réduit résultant de la section elliptique de son piston de commande qui permet de réaliser ainsi qu'on l'a vu, une vanne dont la largeur extérieure n'excède pas la valeur de l'encombrement des éléments de raccordement des conduites auxquels elle est reliée.

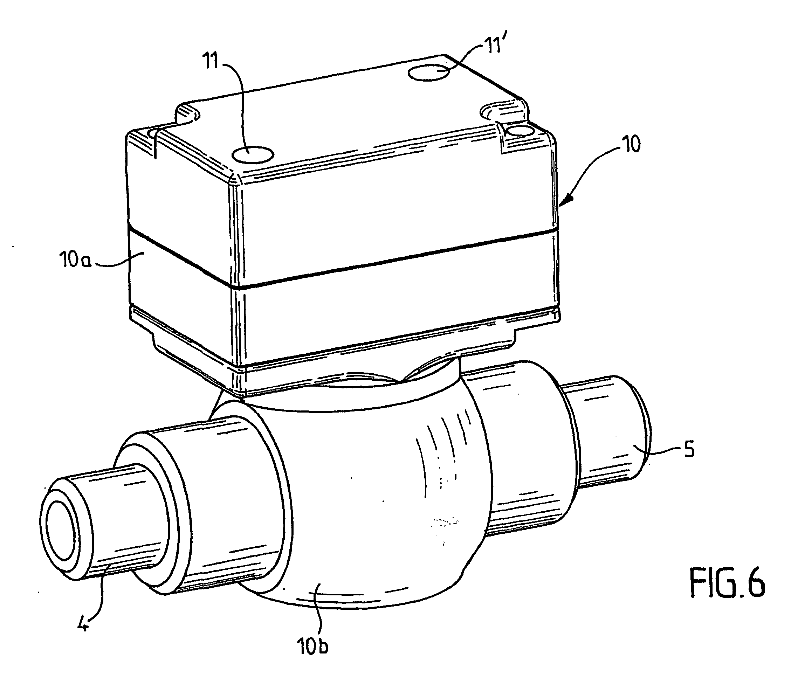

Cette compacité apparaît clairement de l'examen de la figure 6 qui illustre un mode de réalisation qui correspond à celui des figures 1 et 2 et dans lequel on distingue la partie commande pneumatique 10a et la partie distribution 10b du corps d'actionneur. Dans la variante, illustrée par les figures 4 et 5, les parties commande et distribution de la vanne sont intégrées dans un corps d'actionneur 10 ayant sensiblement la forme d'un parallélépipède rectangle de façon à obtenir un corps monobloc.

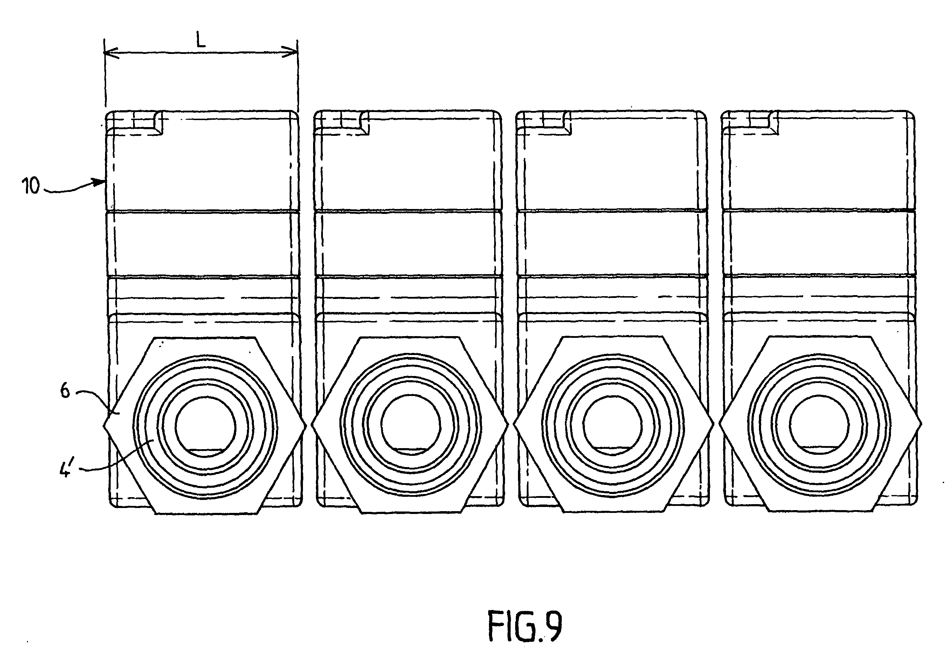

Dans toutes les versions, il est possible de réaliser des assemblages de vannes identique par juxtaposition côte à côte dans un encombrement minimal contrairement à ce qu'il est possible de réaliser avec des vannes classiques à piston de commande à section circulaire. Les figures 7 à 11 c font clairement ressortir cet avantage et l'aspect particulièrement compact des ensemble ainsi réalisés.

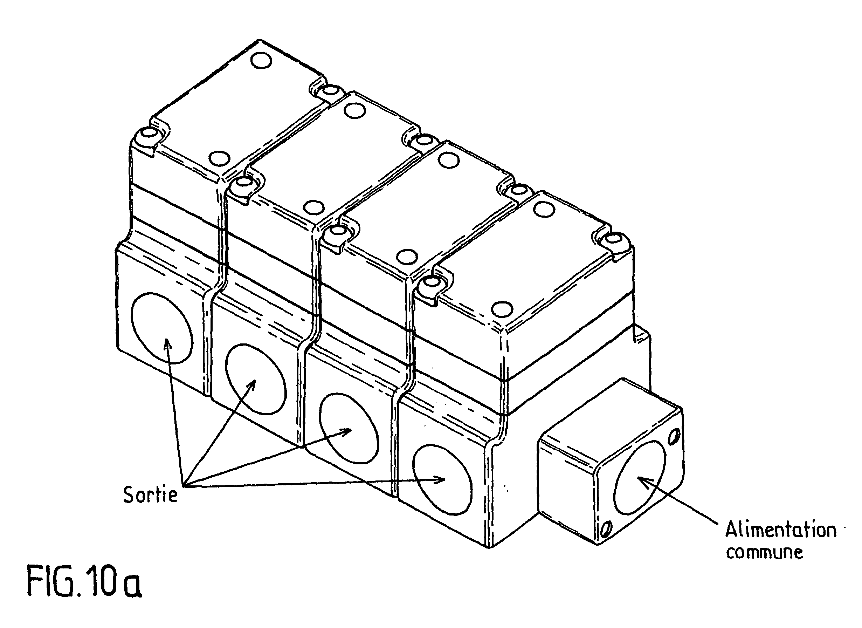

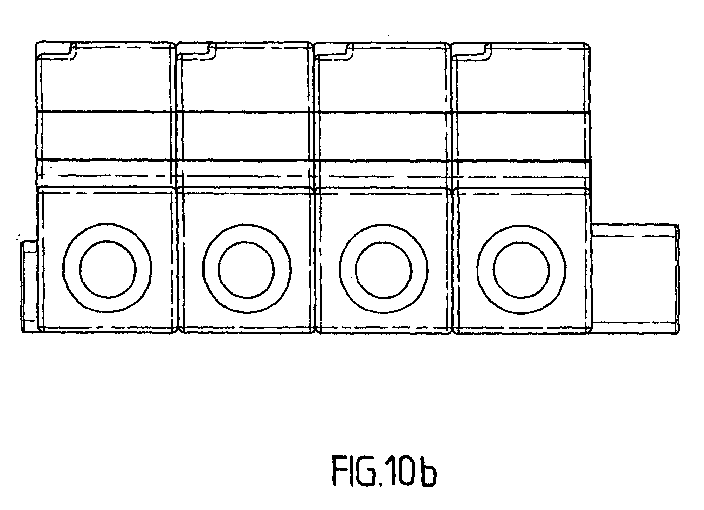

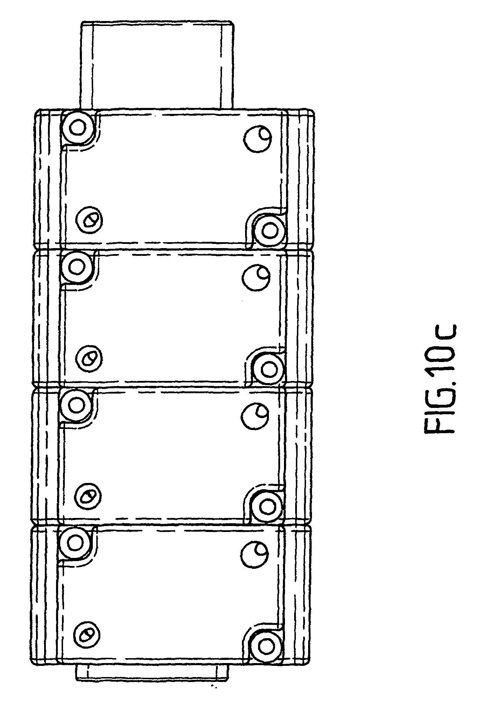

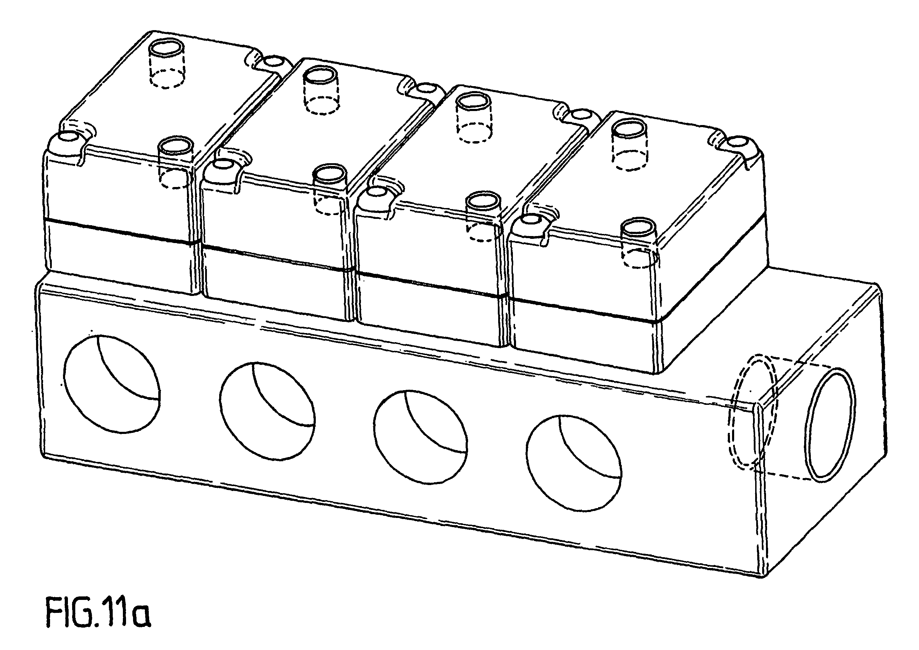

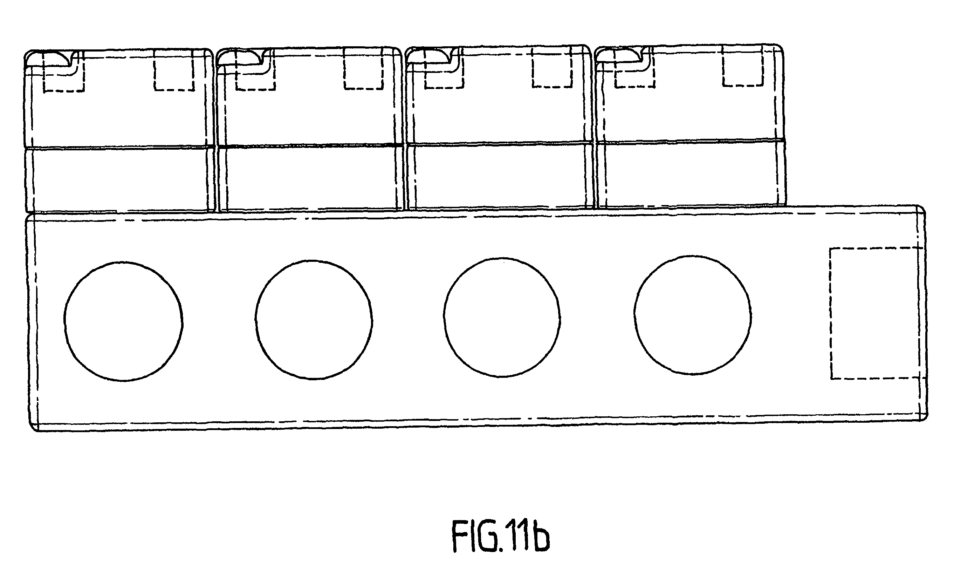

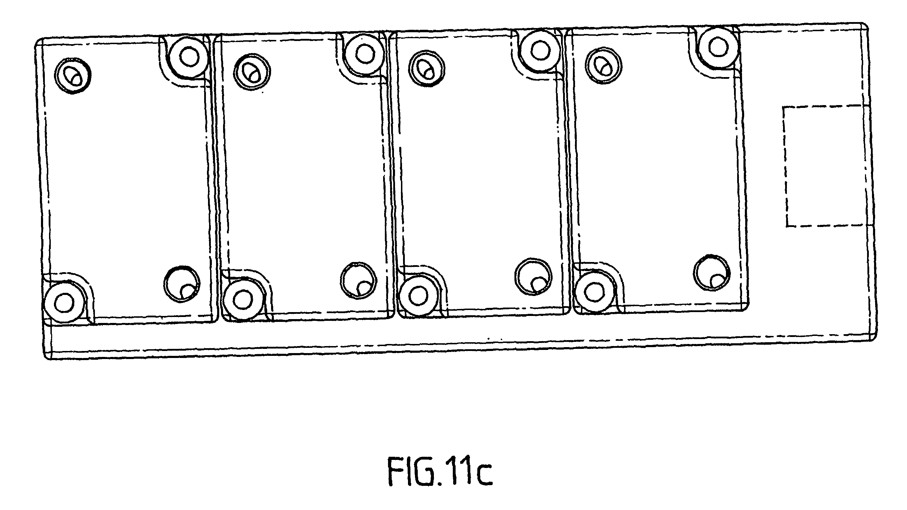

Comme on le voit sur les figures 10a à 11c, la compacité des vannes objet de la présente invention permet de réaliser une construction du type « îlot de distribution » avec une arrivée unique et des sorties multiples :
- dans la variante illustrée par les figures 10a à 10c, les corps juxtaposables sont fixés les uns sur les autres et ils comportent chacun un orifice de sortie et
- dans l'autre variante illustrée par les figures 11a à 11c, les corps juxtaposables également fixés les uns aux autres comportent chacun une sortie avec une arrivée unique.

Il demeure bien entendu que cette invention n'est pas limitée aux exemples de réalisation décrits et/ou représentés, mais qu'elle en englobe toutes les variantes.

## Revendications

1. Vanne à commande pneumatique comportant un piston de commande à rappel par ressort auquel est attelé un organe d'obturation des voies d'admission et d'échappement prévues dans le corps d'actionneur, **caractérisée en ce que** ledit piston de commande (1) présente une section droite elliptique, son grand axe étant situé dans le même plan que l'axe des conduites d'admission et d'évacuation (4', 5') du fluide véhiculé par la vanne et la longueur de son petit axe étant choisie de façon que la largeur du corps (10) de l'actionneur ne dépasse pas la valeur de l'encombrement des éléments de raccordement des conduites auxquelles la dite vanne est raccordée.

2. Vanne selon la revendication 1, **caractérisée en ce que** le joint (9) assurant l'étanchéité entre le corps d'actionneur (10) et le piston de commande (1 ) est monté statique dans un logement prévu dans la corps de vanne.

3. Vanne selon l'une des revendications 1 ou 2, **caractérisée en ce que** l'organe d'obturation (3) est constitué d'un clapet à membrane, cette dernière assurant l'étanchéité entre le corps d'actionneur(10) et la tige de commande (2) prolongeant le piston de commande (1) et dans laquelle est logé ledit clapet.

4. Vanne selon l'une des revendications 1 ou 2, **caractérisée en ce que** l'organe d'obturation (3) est du type clapet-piston (3) et il est monté à l'extrémité de la tige de commande (2) prolongeant le piston de commande (1) des joints (8) assurant l'étanchéité entre ledit corps (10) et ladite tige.

5. Vanne selon l'une quelconque des revendications précédentes, **caractérisée en ce que** le pilotage de son piston de commande (1) s'effectue depuis la partie supérieure du corps d'actionneur, les circuits de pilotage étant prévus dans ledit corps.

6. Vanne selon la revendication 5, **caractérisée en ce que** la partie supérieure du corps d'actionneur est aménagée en plan de pose pour une électrovanne de pilotage.

7. Vanne selon l'une quelconque des revendications précédentes, **caractérisée en ce que** ses parties commande pneumatique et distribution sont intégrées dans un corps monobloc ayant sensiblement la forme d'un parallélépipède rectangle.

## Patentansprüche

1. Pneumatisch angesteuertes Ventil mit einem Steuerkolben mit Federrückstellung, mit welchem ein Organ zum Verschließen von in dem Körper des Stellglieds vorgesehenen Einlaß- und Auslaßwegen gekoppelt ist, **dadurch gekennzeichnet, daß** der Steuerkolben (1) einen elliptischen Querschnitt aufweist, wobei dessen lange Achse sich in der gleichen Ebene befindet, wie die Achse der Zuführ- und Auslaßleitungen (4', 5') für das von dem Ventil transportierte Fluid, und wobei die Länge seiner kurzen Achse derart gewählt ist, daß die Breite des Körpers (10) des Stellglieds nicht den Platzbedarf der Leitungsanschlußelemente übersteigt, mit denen das Ventil verbunden ist.

2. Ventil nach Anspruch 1, **dadurch gekennzeichnet, daß** die die Dichtigkeit zwischen dem Stellgliedkörper (10) und dem Steuerkolben (1) gewährleistende Dichtung (9) statisch in einer im Ventilkörper vorgesehenen Aufnahme angebracht ist.

3. Ventil nach einem der Ansprüche 1 oder 2, **dadurch gekennzeichnet, daß** das Verschließorgan (3) aus einem Membranventil besteht, welches die Dichtigkeit zwischen dem Stellgliedkörper (10) und der Steuerstange (2) gewährleistet, welche den Steuerkolben (1) verlängert und in welcher das Ventil sitzt.

4. Ventil nach einem der Ansprüche 1 oder 2, **dadurch gekennzeichnet, daß** das Verschließorgan (3) vom Ventil-/Kolbentyp (3) ist und an dem Ende der Steuerstange (2) angebracht ist, welche den Steuerkolben (1) verlängert, wobei Dichtungen (8) die Dichtigkeit zwischen dem Körper (10) und der Stange gewährleisten.

5. Ventil nach einem der vorhergehenden Ansprüche, **dadurch gekennzeichnet, daß** die Steuerung seines Steuerkolbens (1) von dem oberen Teil des Stellgliedkörpers aus erfolgt, wobei die Steuerkreise in dem Körper vorgesehen sind.

6. Ventil nach Anspruch 5, **dadurch gekennzeichnet, daß** der obere Teil des Stellgliedkörpers für die Anordnung eines Magnetsteuerventils eingerichtet ist.

7. Ventil nach einem der vorhergehenden Ansprüche, **dadurch gekennzeichnet, daß** seine pneumatischen Steuer- und Verteilungsteile in einem einteiligen Block integriert sind, der im wesentlichen die Form eines rechtwinkligen Quaders hat.

## Claims

1. Pneumatic control valve comprising a spring-return control piston, to which a member for closing the inlet and outlet channels provided in the actuator body is attached, **characterised in that** said control piston (1) has an elliptical cross section, its major axis being located in the same plane as the axis of the inlet and outlet conduits (4', 5') for the fluid conveyed by the valve, and the length of its minor axis being selected such that the width of the body (10) of the actuator does not exceed the value of the overall size of the elements for connecting the conduits to which said valve is connected.

2. Valve according to claim 1, **characterised in that** the seal (9) providing the tightness between the actuator body (10) and the control piston (1) is fitted statically in a recess provided in the valve body.

3. Valve according to either claim 1 or claim 2, **characterised in that** the closure member (3) comprises a membrane check mechanism, said check mechanism providing the tightness between the actuator body (10) and the control rod (2) that extends the control piston (1) and in which said check mechanism is accommodated.

4. Valve according to either claim 1 or claim 2, **characterised in that** the closure member (3) is of the check mechanism-piston type (3) and it is mounted at the end of the control rod (2) extending the control piston (1) of the seals (8) providing the tightness between said body (10) and said rod.

5. Valve according to any one of the preceding claims, **characterised in that** its control piston (1) is operated from the upper portion of the actuator body, the operating circuits being provided in said body.

6. Valve according to claim 5, **characterised in that** the upper portion of the actuator body is configured in a plane for fitting an operating electro-valve.

7. Valve according to any one of the preceding claims, **characterised in that** its pneumatic control and distribution parts are incorporated into a one-piece body having substantially the shape of a rectangular parallelepiped.
